# EUROPÄISCHE PATENTSCHRIFT

(11) **EP 2 909 056 B1**
(45) Veröffentlichungstag und Bekanntmachung des Hinweises auf die Patenterteilung: **30.11.2016**
(21) Anmeldenummer: 13759227.5
(22) Anmeldetag: 09.09.2013
(51) Int. Cl.: B60L 11/18

(54) **ENERGIEÜBERTRAGUNGSVORRICHTUNG UND ENERGIEÜBERTRAGUNGSANORDNUNG**
ENERGY TRANSMISSION DEVICE AND ENERGY TRANSMISSION ARRANGEMENT
DISPOSITIF DE TRANSFERT D'ÉNERGIE ET SYSTÈME DE TRANSFERT D'ÉNERGIE

(30) Priorität: 19.10.2012 DE 102012219062
(43) Veröffentlichungstag der Anmeldung: 26.08.2015
(73) Patentinhaber: Robert Bosch GmbH, 70442 Stuttgart (DE)
(72) Erfinder: LANG, Thomas, 72768 Reutlingen (DE)
(86) Internationale Anmeldenummer: PCT/EP2013/068608
(87) Internationale Veröffentlichungsnummer: WO 2014/060148

(56) Entgegenhaltungen:
- WO-A1-2012/061794
- DE-A1- 19 824 290
- DE-A1-102010 034 175
- DE-A1-102010 049 743
- DE-U1-202007 012 506

## Beschreibung

Die vorliegende Erfindung betrifft eine Energieübertragungsvorrichtung für ein Fahrzeug, das eine Radachse und wenigstens ein Rad aufweist, wobei eine Radfelge des Rads mittels einer Verbindungseinheit mit der Radachse mechanisch gekoppelt ist, und wobei das Rad zum Abrollen auf einem Untergrund ausgebildet ist, um ein Fortbewegen des Fahrzeugs zu ermöglichen.

Ferner betrifft die vorliegende Erfindung eine Energieübertragungsanordnung für ein Fahrzeug, das eine Radachse und wenigstens ein Rad aufweist, wobei das Rad mit der Radachse mechanisch gekoppelt ist und zum Abrollen auf einem Untergrund ausgebildet ist, um ein Fortbewegen des Fahrzeugs zu ermöglichen.

### Stand der Technik

Bei einer Energieübertragung wird z.B. elektrische Energie von einem Objekt auf ein anderes übertragen. Dabei kann beispielsweise ein elektrisches Kabel für die Übertragung verwendet werden. Alternativ besteht die Möglichkeit, die elektrische Energie mithilfe einer drahtlosen Energieübertragung zu übertragen. Die drahtlose Energieübertragung resultiert in einer höheren Mobilität und vermeidet Probleme beim Herstellen eines elektrischen Kontakts. Dadurch kann der Bedienungskomfort gesteigert werden.

Physikalische Grundlage für die drahtlose Energieübertragung im Nahfeldbereich ist entweder die kapazitive oder die induktive Kopplung.

Bei der kapazitiven Energieübertragung werden Sender- und Empfängerfeldplatten parallel zueinander angeordnet und bilden so jeweils einen Flächenkondensator. Wird an die Empfängerfeldplatten eine elektrische Last gekoppelt, so kann bei Anlegen einer elektrischen Wechselspannung ein Wechselstrom über die ausgebildeten Flächenkondensatoren fließen und damit elektrische Leistung an die elektrische Last übertragen werden. Allerdings sind induktive Energieübertragungssysteme zumeist deutlich effizienter.

Bei einer induktiven Energieübertragung wird auf einer Primärseite mithilfe einer Spule ein magnetisches Wechselfeld erzeugt. Zumindest ein Teil dieses magnetischen Wechselfelds durchdringt eine Sekundärseite, die ebenfalls eine Spule aufweist. Dadurch wird in der Spule der Sekundärseite eine Spannung induziert und somit Energie von der Primärseite auf die Sekundärseite übertragen. Eine wichtige Kenngröße bei der induktiven Energieübertragung bildet der Kopplungsfaktor der beiden gekoppelten Spulen. Der Kopplungsfaktor ist definiert über das Verhältnis der Gegeninduktivitäten zu den Selbstinduktivitäten der Spulen. Eine Vergrößerung des Kopplungsfaktors bzw. eine Verbesserung der Kopplung zwischen den Spulen kann durch einen Einsatz ferromagnetischer Materialien erreicht werden, die zum Beispiel oberhalb oder unterhalb der Spulen angebracht werden und den magnetischen Fluss bündeln. Dadurch kann die Effizienz der Energieübertragung verbessert werden.

Des Weiteren besteht die Möglichkeit, sogenannte Resonanzkondensatoren auf der Primärseite und der Sekundärseite anzuordnen, die mit den Spulen entsprechende Resonanzkreise bilden. Werden die Kapazitätswerte der Resonanzkondensatoren so gewählt, dass beide Resonanzkreise bei der Betriebsfrequenz in Resonanz sind, wird die Wirkung der Induktivitäten der Spulen aufgehoben. Damit kann die übertragene Leistung maximiert und die Effizienz der Leistungsübertragung optimiert werden. Dieser resonante Betrieb der Primärseite und der Sekundärseite wird üblicherweise als Magnetresonanzverfahren bezeichnet. Durch die beim Magnetresonanzverfahren eingesetzten Resonanzkreise wird die Leistungsübertragung jedoch stark frequenzabhängig.

Drahtlose Energieübertragungsverfahren können beispielsweise zur Ladung von Traktionsbatterien elektrisch angetriebener Fahrzeuge verwendet werden. Bei bekannten Anordnungen für Vierradfahrzeuge (zum Beispiel Elektrofahrzeuge, Hybridfahrzeuge) wird beispielsweise eine Senderspule horizontal im Boden oder auf einer Matte installiert. Die Empfängerspule befindet sich horizontal im Unterboden (Karosserie) des Fahrzeugs. Es ist bekannt, dass die übertragbare Leistung dieses Systems direkt vom Durchmesser der Spulen und der zu überbrückenden drahtlosen Luftstrecke abhängt. Je kleiner die Spulen ausgeführt sind, desto geringer ist der Wirkungsgrad und damit der zweckmäßige überbrückbare Abstand zwischen der Sender- und der Empfängerspule. Außerdem wird die Kopplung bzw. die Effizienz der Energieübertragung durch einen horizontalen Versatz der beiden Spulen beeinflusst. Aus diesem Grund weisen die Sender- und die Empfängerspule beispielsweise einen identischen, relativ großen Durchmesser auf (zum Beispiel 30 cm). Für die Integration in Zweiradfahrzeugen mit offenem Chassis (zum Beispiel Fahrrädern) ist eine solche Anordnung aufgrund des gewählten Spulendurchmessers nicht geeignet.

Es sind Anordnungen für Zweiradfahrzeuge bekannt, bei denen die Senderspulen beispielsweise in einer Bodenmatte und die Empfängerspule in einem Fahrzeugständer angeordnet sind. Dabei können die Empfängerspulen nur mit einem Durchmesser von ca. 2 bis 3 cm realisiert werden. Infolgedessen beträgt die zweckmäßige Übertragungsstrecke ebenfalls nur wenige Zentimeter (zum Beispiel 2 bis 3 cm). Darauf folgt eine hohe Anforderung an die Positioniergenauigkeit der Sender- und Empfängerspule in senkrechter wie auch lateraler Richtung. Werden die Sender- und die Empfängerspule nicht exakt zueinander positioniert, so verkleinert sich der Kopplungsfaktor und damit die Effizienz der Energieübertragung. Dies führt jedoch zu einem schlechten Bedienungskomfort des drahtlosen Energieübertragungssystems.

WO 2012/ 061794 A1 zeigt eine Energieübertragungsvorrichtung gemäß der Präambel von Anspruch 1.

### Offenbarung der Erfindung

Die vorliegende Erfindung stellt daher eine Energieübertragungsvorrichtung für ein Fahrzeug, das eine Radachse und wenigstens ein Rad aufweist, bereit, wobei eine Radfelge des Rads mittels einer Verbindungseinheit mit der Radachse mechanisch gekoppelt ist und wobei das Rad zum Abrollen auf einem Untergrund ausgebildet ist, um ein Fortbewegen des Fahrzeugs zu ermöglichen, wobei die Energieübertragungsvorrichtung eine Anschlusseinheit zum Anschließen einer elektrischen Energiequelle oder einer elektrischen Energiesenke und wenigstens ein Übertragungsglied aufweist, das mit der Anschlusseinheit elektrisch gekoppelt ist und das dazu ausgebildet ist, mittels drahtloser Energieübertragung elektrische Energie zwischen der elektrischen Energiequelle oder Energiesenke und einer außerhalb des Fahrzeugs angeordneten externen Energieübertragungseinheit auszutauschen, wobei die Energieübertragungsvorrichtung rotationsfest mit dem Rad des Fahrzeugs verbunden ist.

Die Verbindungseinheit weist erfindungsgemäß eine Mehrzahl von Speichen auf, wobei die Energieübertragungsvorrichtung eine elektrische Leitung aufweist, die in einer der Speichen angeordnet ist und die das Übertragungsglied mit der Anschlusseinheit elektrisch koppelt.

Die Anordnung der elektrischen Leitung in einer der Speichen bietet eine konstruktiv sehr einfache und zuverlässige Lösung für die elektrische Kontaktierung zwischen dem Übertragungsglied und der Anschlusseinheit. Damit sind keine zusätzlichen mechanischen Elemente zur Führung von elektrischen Leitungen notwendig, die das Gewicht des Rades erhöhen würden.

Ferner stellt die vorliegende Erfindung eine Energieübertragungsanordnung für ein Fahrzeug, das eine Radachse und wenigstens ein Rad aufweist, bereit, wobei das Rad mit der Radachse mechanisch gekoppelt ist und zum Abrollen auf einem Untergrund ausgebildet ist, um ein Fortbewegen des Fahrzeugs zu ermöglichen, wobei die Energieübertragungsanordnung eine erfindungsgemäße Energieübertragungsvorrichtung und eine außerhalb des Fahrzeugs angeordnete externe Energieübertragungseinheit aufweist, die mit der Energieübertragungsvorrichtung zum Übertragen von elektrischer Energie induktiv, magnetresonant oder kapazitiv gekoppelt ist.

### Vorteile der Erfindung

Entgegen den bekannten Energieübertragungssystemen werden bei der erfindungsgemäßen Energieübertragungsvorrichtung die Räder bzw. Radfelgen des Fahrzeugs für die Anordnung des Übertragungsglieds genutzt. Somit besteht die Möglichkeit, beispielsweise auch Traktionsbatterien von Zweirädern mit einer hohen Übertragungsleistung zu laden, die über keine Bodengruppe zur Unterbringung größerer Empfängerspulen verfügen.

Des Weiteren kann die Energieübertragung zwischen der externen Energieübertragungseinheit und dem mit dem Rad des Fahrzeugs rotationsfest verbundenen Übertragungsglied auch bei drehenden Rädern ausgeführt werden.

Wird die Energieübertragungsvorrichtung an mehreren Rädern des Fahrzeugs installiert, so kann die übertragbare Leistung aufgrund der größeren wirksamen Gesamt-Spulenfläche gegenüber einer einfach ausgeführten Empfängerspule in einem Unterboden des Fahrzeugs vervielfacht werden. Dabei ist es unerheblich, ob es sich bei dem verwendeten Rad um ein Antriebsrad des Fahrzeugs handelt oder nicht.

Darüber hinaus kann die Energieübertragungsvorrichtung sehr universell eingesetzt werden, da sie sich für alle Radfahrzeuge eignet. Bei der Energieübertragungsvorrichtung werden Bauräume des Fahrzeugs benutzt, die bisher nicht für eine Anordnung von Übertragungsgliedern vorgesehen waren. Durch die erfindungsgemäße Anordnung des Übertragungsglieds in dem Rad des Fahrzeugs kann eine sehr kompakte Bauform der Energieübertragungsvorrichtung erzielt werden.

In einer Ausführungsform weist die Verbindungseinheit eine Radnabe auf, wobei die Anschlusseinheit an der Radnabe angeordnet ist.

Die Anschlusseinheit dient zum Anschließen der elektrischen Energiequelle oder der elektrischen Energiesenke. Beispielsweise kann die Traktionsbatterie eines elektrisch angetriebenen Fahrzeugs mit der Anschlusseinheit elektrisch verbunden werden, um die Traktionsbatterie mit elektrischer Energie aufzuladen. Durch die Anordnung der Anschlusseinheit an der Radnabe kann der elektrische Kontakt zu der Traktionsbatterie, die in einem Rahmen bzw. einer Karosserie des Fahrzeugs installiert ist, sehr einfach hergestellt werden.

Die Energieübertragungsvorrichtung kann zur elektrischen Kontaktierung zwischen dem Übertragungsglied und der Anschlusseinheit auch eine Mehrzahl von elektrischen Leitungen aufweisen, die in der Mehrzahl von Speichen angeordnet sind.

Gemäß einer weiteren Ausführungsform ist das Übertragungsglied zum Übertragen der Energie induktiv, magnetresonant oder kapazitiv mit der externen Energieübertragungseinheit koppelbar.

Da das Übertragungsglied in unterschiedlichsten Geometrien in dem Rad des Fahrzeugs ausgebildet werden kann, lässt sich mithilfe der erfindungsgemäßen Energieübertragungsvorrichtung ein induktives, magnetresonantes oder kapazitives Übertragungsverfahren realisieren.

In einer weiteren Ausführungsform ist das Übertragungsglied auf oder in der Radfelge angeordnet.

Durch die Anordnung zum Beispiel von Spulen in einer Fahrradfelge mit einem Felgendurchmesser von 28 Zoll (622 mm) kann aufgrund der großen Spulenfläche eine hohe Leistung übertragen werden. Außerdem sind dadurch neben dem induktiven Übertragungsverfahren auch Übertragungsverfahren mit geringerer Energiedichte (zum Beispiel Magnetresonanzverfahren) für ein Zweirad umsetzbar. Bei den bekannten Systemen scheiterte eine Anwendung derartiger Verfahren daran, dass aufgrund der geringeren Energiedichte größere Spulen verwendet werden müssen, die bislang in Zweirädern nicht installiert werden konnten.

Die generell höhere Leistungsdichte der erfindungsgemäßen Energieübertragungsvorrichtung ermöglicht außerdem einen höheren Abstand zwischen dem Übertragungsglied und der externen Energieübertragungseinheit, wodurch der Bedienungskomfort für den Anwender erhöht wird.

Gemäß einer weiteren Ausführungsform ist das Übertragungsglied an der Verbindungseinheit in der Nähe der Radachse angeordnet.

Durch eine derartige Anordnung können die durch das Übertragungsglied verursachten Trägheitskräfte verringert werden.

In einer weiteren Ausführungsform ist das Übertragungsglied in einer Querschnittsebene des Rads angeordnet, wobei die Radachse in der Querschnittsebene liegt.

Durch die Anordnung des Übertragungsglieds in dem Querschnitt des Rads kann die externe Energieübertragungseinheit unterschiedlich zu dem Fahrzeug positioniert werden. Abhängig von der Radstellung kann die externe Energieübertragungseinheit beispielsweise unter dem Fahrzeug, seitlich oder vor/hinter dem Fahrzeug angeordnet werden. Außerdem können auch weitere Übertragungsglieder in weiteren Querschnittsebenen des Rades angeordnet werden. Beispielsweise kann eine zweite Spule als Übertragungsglied vorgesehen werden, die senkrecht zu einer ersten Spule angeordnet ist. Dies führt zu einer Vielzahl von Radstellungen, bei denen eine effiziente Energieübertragung stattfinden kann.

In einer weiteren Ausführungsform weist das Übertragungsglied eine Spule auf.

Für die Spule können verschiedenste Geometrien realisiert werden. Beispielsweise kann die Spule eine runde oder eine rechteckige Querschnittsfläche aufweisen. Außerdem können ferromagnetische Materialien eingesetzt werden, die zum Beispiel ober- und/oder unterhalb der Spulen angebracht werden und die den magnetischen Fluss bündeln, um damit eine Verbesserung der Kopplung zwischen der Spule des Übertragungsglieds und einer Spule der externen Energieübertragungseinheit zu erreichen.

In einer weiteren Ausführungsform ist eine Längsachse der Spule parallel zu der Radachse angeordnet.

In dieser Ausführungsform wird die Spule radialsymmetrisch auf/in der Radfelge angeordnet. Dabei können Ferritplatten oder -kerne zur Verstärkung des Magnetfelds auf/in der Radfelge angeordnet sein. Durch die große Querschnittsfläche der Spule des Übertragungsglieds kann eine hohe Leistung übertragen werden.

In einer weiteren Ausführungsform ist eine Längsachse der Spule tangential zu einem Kreis um die Radachse angeordnet.

Dabei besteht die Möglichkeit, eine oder mehrere Spulen für die Energieübertragung zu verwenden. Beispielsweise können die Spulen auf/in der Radfelge ausgeführt werden. Damit wird ein bereits vorhandener bislang ungenutzter Bauraum zwischen der Felge und dem Reifen für die Anordnung der Spulen verwendet. Alternativ können die Spulen auch in der Nähe der Nabe angeordnet werden, um die Trägheitskräfte des Rades zu verringern.

Gemäß einer weiteren Ausführungsform weist die Energieübertragungsvorrichtung einen Magnetsensor auf, der dazu ausgebildet ist, eine Ausrichtung und/oder eine Stärke eines Magnetfelds zu erfassen.

Mit Hilfe des Magnetsensors kann das zur Energieübertragung ausgebildete Magnetfeld exakt bestimmt werden. Infolgedessen besteht beispielsweise die Möglichkeit, die Ausrichtung der Energieübertragungsvorrichtung zu ändern, um die Effizienz der Energieübertragung zu erhöhen.

Gemäß einer weiteren Ausführungsform weist das Übertragungsglied eine Kondensatorplatte auf.

In dieser Ausführungsform ist das Übertragungsglied kapazitiv mit der externen Energieübertragungseinheit gekoppelt. Die Kondensatorplatte ist vorzugsweise in der Nähe der Nabe/Rotationsachse des Rades angeordnet, um die Trägheitskräfte zu verringern. Zur Erhöhung der Kapazität können auch mehrere Kondensatorplatten vorgesehen werden, die parallel verschaltet werden.

Gemäß einer weiteren Ausführungsform weist die Energieübertragungsvorrichtung einen Positionssensor auf, der dazu ausgebildet ist, eine Position des Rads zu erfassen.

Mithilfe des Positionssensors kann eine präzise Positionierung des Übertragungsglieds zu der externen Energieübertragungseinheit sichergestellt werden. Dadurch wird eine hohe Effizienz der Energieübertragung erreicht.

In einer weiteren Ausführungsform weist die Energieübertragungsvorrichtung eine Steuereinheit auf, die mit der Anschlusseinheit elektrisch gekoppelt ist und die dazu ausgebildet ist, die Energieübertragung zu steuern.

Durch die zusätzliche Integration der Steuereinheit wird eine sehr kompakte Bauform der Energieübertragungsvorrichtung erzielt. Vorzugsweise wird die Steuereinheit in der Nähe der Nabe positioniert, um die Trägheitskräfte des Rads zu minimieren. Die Steuereinheit kann außerdem mit dem Positionssensor und dem Magnetsensor, der die Stärke des magnetischen Felds ermittelt, gekoppelt sein, um in Abhängigkeit von Signalen der beiden Sensoren die Energieübertragung zu steuern.

In einer Ausführungsform der Energieübertragungsanordnung ist die Energieübertragungsvorrichtung mit einer Traktionsbatterie des Fahrzeugs und die externe Energieübertragungseinheit mit einem elektrischen Energieversorgungsnetz elektrisch gekoppelt. Die externe Energieübertragungseinheit ist dazu ausgebildet, elektrische Energie an die Energieübertragungsvorrichtung zu übertragen, um die Traktionsbatterie zu laden.

Dies stellt eine bevorzugte Ausführungsform der erfindungsgemäßen Energieübertragungsanordnung dar. Durch die erfindungsgemäße Anordnung der Energieübertragungsvorrichtung in dem Rad des Fahrzeugs wird die Leistungsdichte der Übertragung erhöht. Dies ermöglicht einen größeren Abstand zwischen der Energieübertragungsvorrichtung und der externen Energieübertragungseinheit. Dadurch wird der Bedienkomfort der Energieübertragungsanordnung verbessert. Des Weiteren ermöglicht die höhere Leistungsdichte einen schnelleren Ladevorgang der Traktionsbatterie.

Es versteht sich, dass die Merkmale, Eigenschaften und Vorteile der erfindungsgemäßen Energieübertragungsvorrichtung auch entsprechend auf die erfindungsgemäße Energieübertragungsanordnung zutreffen bzw. anwendbar sind.

Kurze Beschreibung der Zeichnungen
- Figuren 1 -9: zeigen verschiedene Ausführungsformen einer Energieübertragungsvorrichtung für ein elektrisch angetriebenes Fahrzeug, die induktiv oder magnetresonant mit einer externen Energieübertragungseinheit koppelbar ist; und
- Figur 10: zeigt eine Ausführungsform der Energieübertragungsvorrichtung für ein elektrisch angetriebenes Fahrzeug, die kapazitiv mit der externen Energieübertragungseinheit koppelbar ist.

### Ausführungsformen der Erfindung

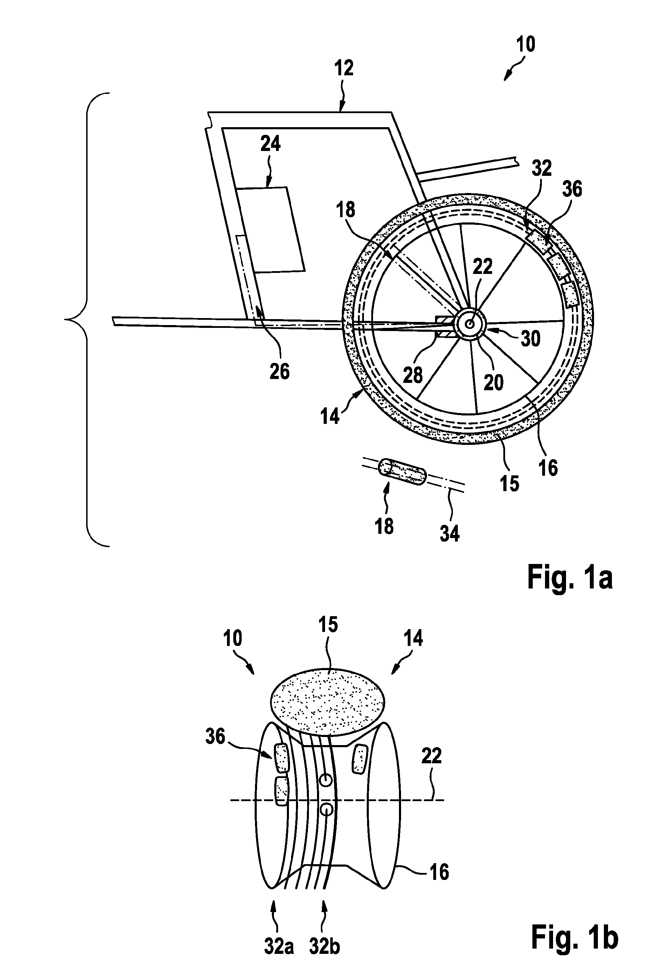

In der Fig. 1 a ist eine Ausführungsform einer erfindungsgemäßen Energieübertragungsvorrichtung 10 für ein elektrisch angetriebenes Fahrzeug 12 dargestellt. Das elektrisch angetriebene Fahrzeug 12 ist in dem vorliegenden Fall ein elektrisch angetriebenes Fahrrad (E-Bike). Das Fahrrad 12 weist zwei Räder 14 auf, wobei in Fig. 1 a aus Übersichtlichkeitsgründen lediglich ein Rad 14 dargestellt ist. Das Rad 14 weist einen Reifen 15 auf, der auf eine Radfelge 16 aufgezogen ist. Die Radfelge 16 ist über eine Mehrzahl von Speichen 18 mit einer Radnabe 20 verbunden, die eine mechanische Kopplung zu einer Radachse 22 des Fahrrads 12 herstellt.

Da es sich in dem vorliegenden Beispiel um ein elektrisch angetriebenes Fahrrad 12 handelt, weist das Fahrrad 12 eine Traktionsbatterie 24 auf, die elektrische Energie zum Antreiben des Fahrrads 12 bereitstellt. Dazu ist die Traktionsbatterie 24 über einen Kabelbaum 26 mit einer Anschlusseinheit 28 verbunden, die den elektrischen Kontakt zu einem Radnabenmotor 30 herstellt. Mithilfe der von der Traktionsbatterie 24 bereitgestellten elektrischen Energie treibt der Radnabenmotor 30 das Fahrrad 12 an. Nach einer bestimmten Betriebsdauer des Fahrrads 12 muss die Traktionsbatterie 24 wieder mit elektrischer Energie geladen werden. Zu diesem Zweck weist das Fahrrad 12 die erfindungsgemäße Energieübertragungsvorrichtung 10 auf, die dazu ausgebildet ist, eine mittels einer drahtlosen Energieübertragung transferierte elektrische Energie in den Kabelbaum 26 einzuspeisen und damit die Traktionsbatterie 24 aufzuladen. Die Energieübertragungsvorrichtung 10 ist rotationsfest mit dem Rad 14 des Fahrrads 12 verbunden. Die Energieübertragungsvorrichtung 10 weist ein Übertragungsglied 32, im vorliegenden Fall eine Spule 32, auf. Die Spule 32 ist über wenigstens eine elektrische Leitung 34 mit der Anschlusseinheit 28 elektrisch gekoppelt, die an der Radnabe 20 angeordnet ist.

Die elektrische Leitung (34) ist in einer der Speichen 18 ausgebildet. Eine in der Spule 32 induzierte Spannung aufgrund eines magnetischen Wechselfeldes bzw. ein in der Spule 32 induzierter Strom kann somit über die elektrische Leitung 34, die Anschlusseinheit 28 und den Kabelbaum 26 an die Traktionsbatterie 24 weitergeleitet werden. Somit kann die Traktionsbatterie 24 infolge eines auf die Spule 32 wirkenden magnetischen Feldes mit elektrischer Energie aufgeladen werden. Die Spule 32 ist in diesem Ausführungsbeispiel radialsymmetrisch auf der Radfelge 16 angeordnet. Mit anderen Worten ist eine Längsachse der Spule 32 parallel zu der Radachse 22 angeordnet.

Zur Verstärkung bzw. Bündelung des Magnetfeldes sind außerdem Ferritplatten/-kerne 36 auf der Radfelge 16 angeordnet. Durch die erfindungsgemäße Anordnung der Spule 32 auf der Radfelge 16 weist die Spule 32 einen großen Durchmesser auf. Damit kann eine hohe Leistungsdichte bei der Energieübertragung erzielt werden. Die in der Fig. 1a illustrierte Energieübertragung basiert dabei zum Beispiel auf einem induktiven Übertragungsverfahren, bei dem beispielsweise nur eine Spule 32 eingesetzt wird.

In den folgenden Figuren sind weitere Ausführungsformen der erfindungsgemäßen Energieübertragungsvorrichtung 10 dargestellt, die alle auf dem Prinzip beruhen, dass die Energieübertragungsvorrichtung 10 rotationsfest mit dem Rad 14 des Fahrzeugs 12 verbunden ist. Gleiche Elemente in Bezug auf vorausgehende Ausführungsformen sind daher durch gleiche Bezugszeichen gekennzeichnet. In den Folgefiguren werden im Wesentlichen die Unterschiede erläutert.

In Fig. 1b ist eine weitere Ausführungsform der Energieübertragungsvorrichtung 10 dargestellt, die auf dem Magnetresonanzverfahren basiert. Dazu sind zwei Spulen 32a, 32b auf der Radfelge 16 angeordnet, die beispielsweise unterschiedliche Windungszahlen aufweisen. Wie der Fig. 1b zu entnehmen ist, sind die Spulen 32a, 32b radialsymmetrisch zu der Radfelge 16 angeordnet und nutzen damit einen Bauraum zwischen der Radfelge 16 und dem Reifen 15. Dies führt zu seiner sehr kompakten Bauweise.

In einer alternativen Ausführungsform können die Spulen 32a, 32b und/oder die Ferritplatten 36 in der Radfelge 16 ausgebildet sein.

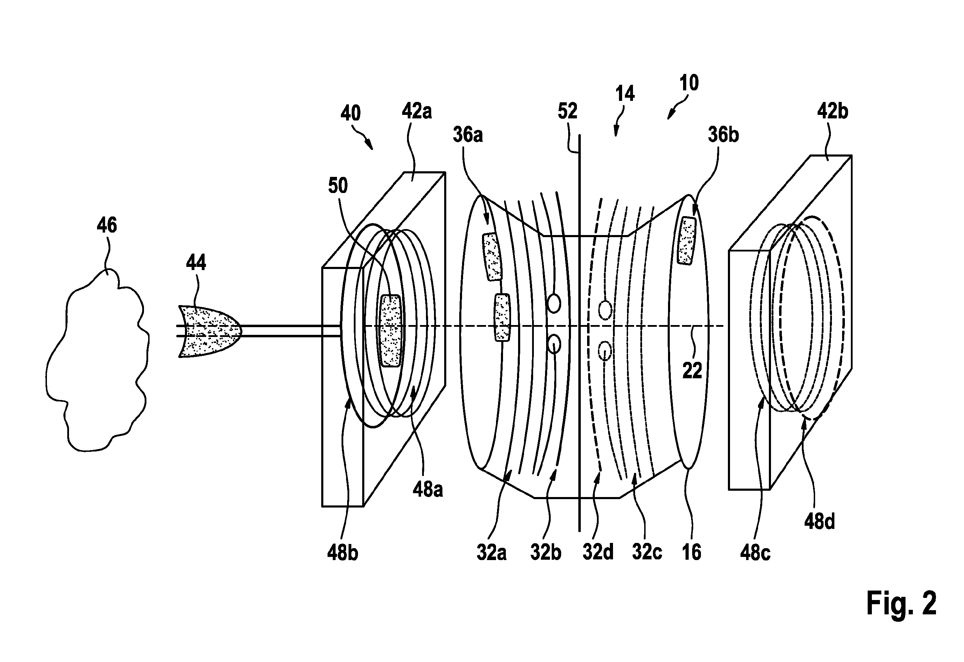

In der Fig. 2 ist eine Energieübertragungsanordnung 40 dargestellt, die die Energieübertragungsvorrichtung 10 und eine außerhalb des Fahrzeugs 12 angeordnete externe Energieübertragungseinheit 42a, 42b aufweist. Die externe Energieübertragungseinheit 42a, 42b ist über einen Steckkontakt 44 mit einem Energieversorgungsnetz 46 gekoppelt und ist dazu ausgebildet, elektrische Energie mittels eines drahtlosen Energieübertragungsverfahrens von dem Energieversorgungsnetz 46 an die Energieübertragungsvorrichtung 10 zu übertragen. In dem in Fig. 2 illustrierten Ausführungsbeispiel ist die externe Energieübertragungseinheit 42 induktiv oder magnetresonant mit der Energieübertragungsvorrichtung 10 gekoppelt. Dazu weist die Energieübertragungseinheit 42 die Spulen 48 auf, die beispielsweise unterschiedliche Windungszahlen aufweisen können. Zur Verstärkung und Bündelung des Magnetfelds kann im Bereich der Spulen 48 ein Ferritkern 50 angeordnet sein. Vorteilhafterweise sind dabei die Spulen 48 im Wesentlichen parallel zu der Radfelge 16 angeordnet. Die Spulen 32 der Energieübertragungsvorrichtung 10 können ebenfalls unterschiedliche Windungszahlen aufweisen.

Zur Übertragung einer hohen Energie sind die Energieübertragungsvorrichtung 10 und die Energieübertragungseinheit 42 symmetrisch zu einer in Fig. 2 dargestellten Symmetrieebene 52 ausgebildet.

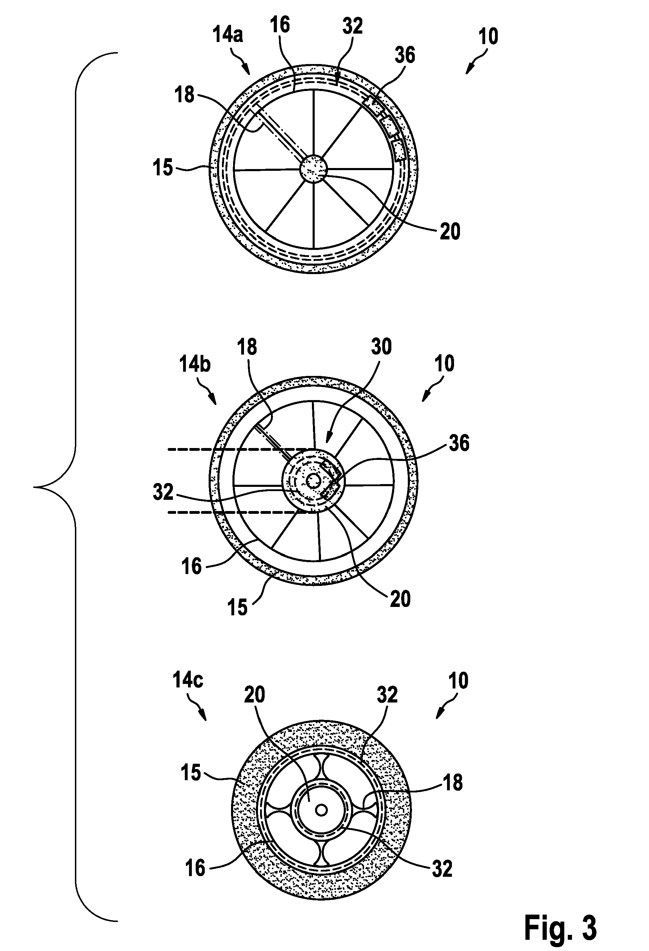

In Fig. 3 sind weitere Ausführungsformen der Energieübertragungsvorrichtung 10 gezeigt, in denen die Spule 32 an unterschiedlichen Stellen des Rads 14 angeordnet ist. So ist die Spule 32 in dem Rad 14a auf/in der Radfelge 16 positioniert. In dem Rad 14b ist die Spule 32 hingegen auf dem Radnabenmotor 30 ausgebildet. Bei dem Rad 14c ist die Spule 32 auf/in der Radfelge 16 und/oder in der Umgebung der Radnabe 20 ausgeführt. Der Fig. 3 ist zu entnehmen, dass die Spule 32 sehr flexibel in dem Rad 14 positioniert werden kann.

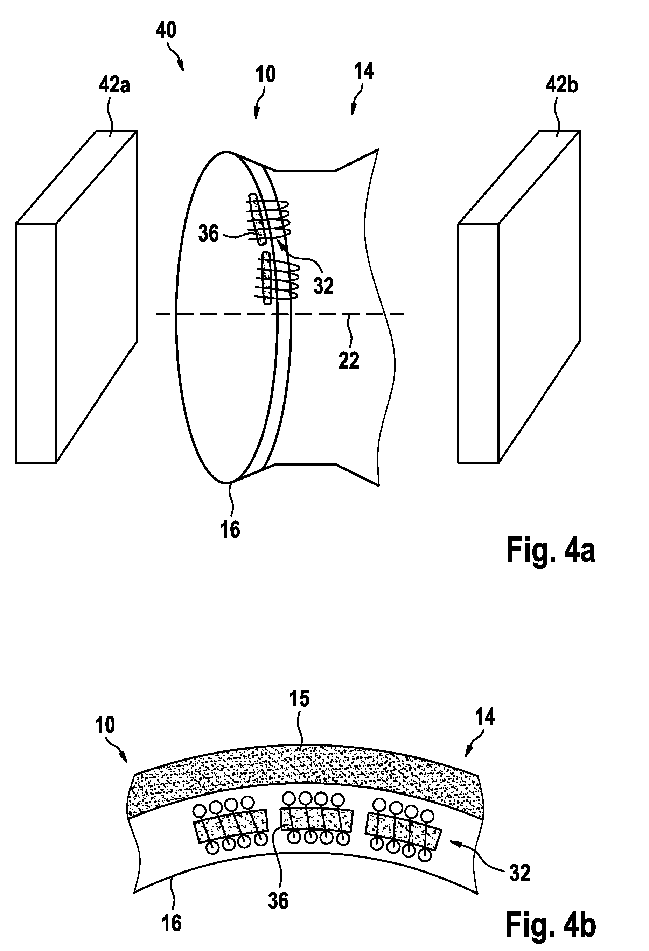

Fig. 4a illustriert eine weitere Ausführungsform der Energieübertragungsanordnung 40 und der Energieübertragungsvorrichtung 10. In diesem Ausführungsbeispiel sind die Spulen 32 tangential auf/in der Radfelge 16 angeordnet. Mit anderen Worten ist eine Längsachse der jeweiligen Spule 32 tangential zu einem Kreis um die Radachse 22 angeordnet. Zur Verstärkung des Magnetfelds können Ferritplatten 36 in der Umgebung der Spulen 32 installiert werden. Die Energieübertragung der Energieübertragungsanordnung 40 basiert auf einer induktiven oder magnetresonanten Kopplung zwischen der Energieübertragungseinheit 42 und der Energieübertragungsvorrichtung 10.

In Fig. 4b ist ein Querschnitt des Rads 14 von dem in Fig. 4a dargestellten Ausführungsbeispiel gezeigt. Wie der Fig. 4b zu entnehmen ist, können mehrere Spulen 32 tangential zu der Radfelge 16 positioniert werden. Die Ferritkerne 36 können beispielsweise in der Umgebung einer Spulenachse positioniert werden.

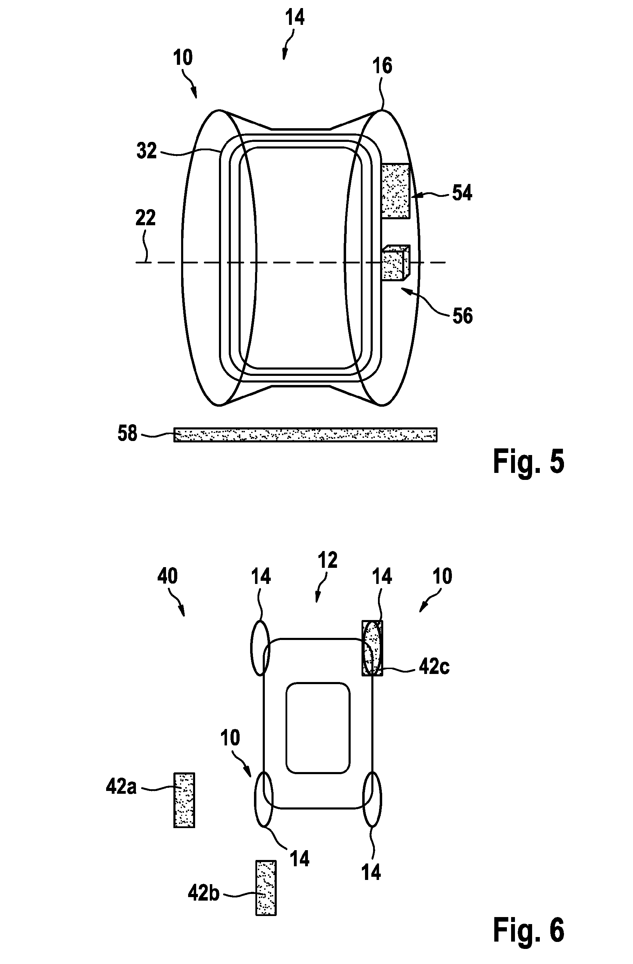

In der Fig. 5 ist eine weitere Ausführungsform der Energieübertragungsvorrichtung 10 dargestellt, in der die Spule 32 in einem Querschnitt der Radfelge 16 angeordnet ist. Auch in dieser Ausführungsform kann ein Ferritkern 36 in der Umgebung der Spule 32 angeordnet werden, um das Magnetfeld zu verstärken. Die elektrische Kontaktierung der Spule 32 erfolgt wiederum über die in Fig. 5 nicht dargestellte elektrische Leitung 34, die die elektrische Verbindung beispielsweise zu der Traktionsbatterie 24 herstellt. Außerdem weist die Energieübertragungsvorrichtung 10 aus Fig. 5 eine Steuereinheit 54, im vorliegenden Fall ein Ladegerät 54, und einen Positionssensor 56 auf. Das Ladegerät 54 ist dazu ausgebildet, den Ladevorgang der Traktionsbatterie 24 zu steuern. Der Positionssensor 56 ist dazu ausgebildet, eine Position des Rads 14 zu erfassen. Somit kann die Spule 32 mittels des Positionssensors 56 beispielsweise senkrecht oder waagrecht zu einem Untergrund 58 ausgerichtet werden. Dadurch kann die Effizienz der Energieübertragung zwischen der Energieübertragungsvorrichtung 10 und der Energieübertragungseinheit 42 optimiert werden.

Aufgrund der Anordnung der Spule 32 in dem Querschnitt der Radfelge 16 und der Radpositionserkennung mithilfe des Positionssensors 56 kann die Energieübertragungseinheit 42 an verschiedenen Positionen relativ zu dem Fahrzeug 12 angeordnet werden. Dies ist in Fig. 6 dargestellt. Beispielsweise kann die Energieübertragungseinheit 42a seitlich zu dem Fahrzeug 12 positioniert werden. Alternativ oder zusätzlich kann die Energieübertragungseinheit 42 vor/hinter oder unter dem Fahrzeug angeordnet werden (siehe Bezugszeichen 42b, 42c). Wird die Energieübertragungsvorrichtung 10 und die Energieübertragungseinheit 42 an jedem der Räder 14 des Vierradfahrzeuges 12 aus Fig. 6 vorgesehen, so kann die Ladeleistung auf den vierfachen Wert erhöht werden.

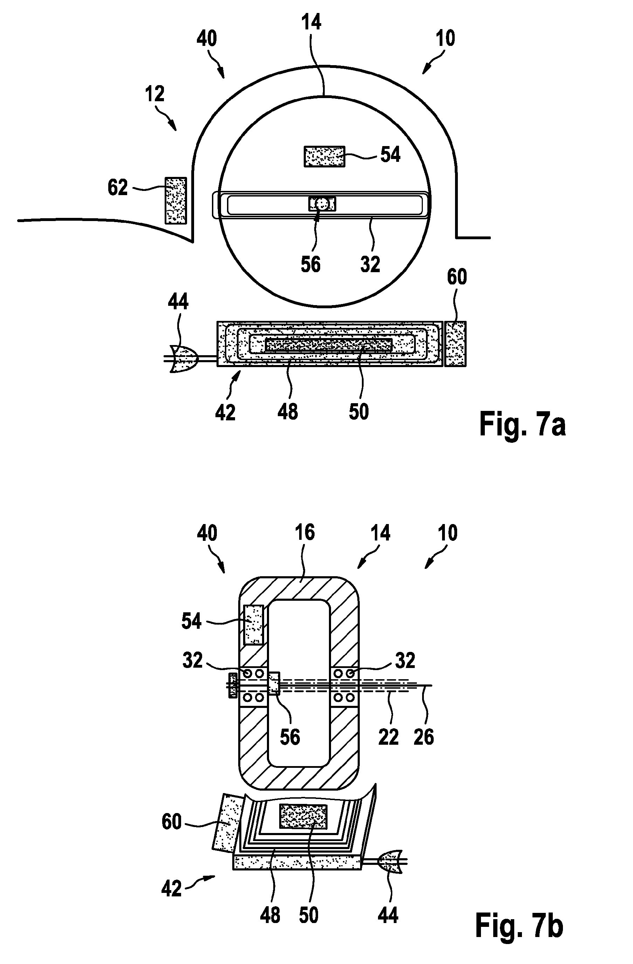

In der Fig. 7a ist eine weitere Ausführungsform der Energieübertragungsanordnung 40 dargestellt. Die Energieübertragungseinheit 42 weist hier eine externe Steuervorrichtung 60 auf, die zur senderseitigen Steuerung der Senderspulen 48 eingesetzt werden kann. Die Energieübertragungsanordnung 40 weist zusätzlich einen Magnetsensor 62 auf, der in einer Karosserie des Fahrzeugs 12 installiert ist und der dazu ausgebildet ist, eine Ausrichtung/Stärke des Magnetfelds zu erfassen. Die von dem Magnetsensor 62 und dem Positionssensor 56 bereitgestellten Signale können beispielsweise von dem Ladegerät 54 ausgewertet werden, um eine Ladebereitschaft der Energieübertragungsanordnung 40 zu erkennen und/oder um den Wirkungsgrad der Energieübertragung zu verbessern. Wahlweise wird zur Bündelung des Magnetfelds eine Ferritscheibe 50 oder ein Ferritkern 50 verwendet.

Fig. 7b zeigt einen Querschnitt des Rads 14 zur Illustrierung einer weiteren Ausführungsform der Energieübertragungsanordnung 40. Wie der Fig. 7b zu entnehmen ist, ist das Ladegerät 54 innerhalb der Radfelge 16 angeordnet. Die Spulen 32 und der Positionssensor 56 sind in der Nähe zu der Radachse 22 positioniert. Die elektrische Kontaktierung der Spulen 32 erfolgt über den Kabelbaum 26, der innerhalb der Radachse 22 geführt ist.

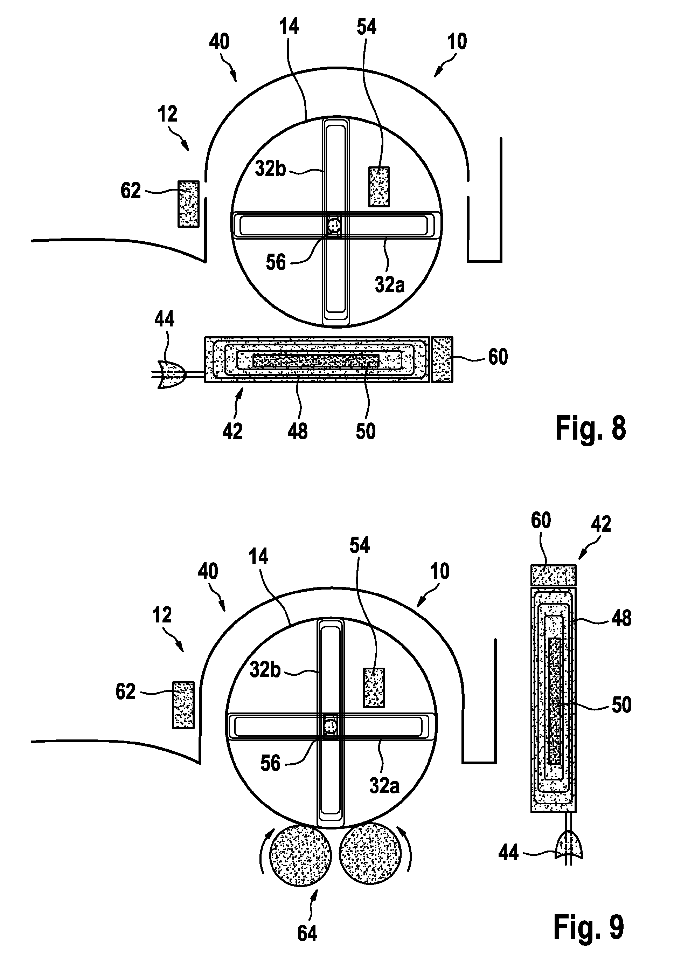

In der in Fig. 8 dargestellten Ausführungsform der Energieübertragungsanordnung 40 sind zwei Spulen 32a, 32b in dem Querschnitt des Rads 14 bzw. im Querschnitt der Radfelge 16 ausgebildet. Dabei ist die Spule 32b senkrecht zu der Spule 32a ausgerichtet. Dadurch ergeben sich mehrere Ladepositionen des Rads 14, in denen eine effiziente Energieübertragung ermöglicht wird. Des Weiteren besteht die Möglichkeit, die Spulen 32a, 32b mittels entsprechend angeordneter Energieübertragungseinheiten 42 getrennt voneinander zu betreiben.

In Fig. 9 ist das Rad 14 auf einer Laufrolle 64 angeordnet. Damit kann das Fahrzeug 12 auf der Laufrolle 64 betrieben werden, wobei gleichzeitig die Traktionsbatterie 24 des Fahrzeugs 12 geladen wird. Beispielsweise ergibt sich eine derartige Lademöglichkeit der Traktionsbatterie 24 während einer Endabnahme in der Fertigung, während eines Werkstattaufenthalts oder während einer technischen Überprüfung des Fahrzeugs 12.

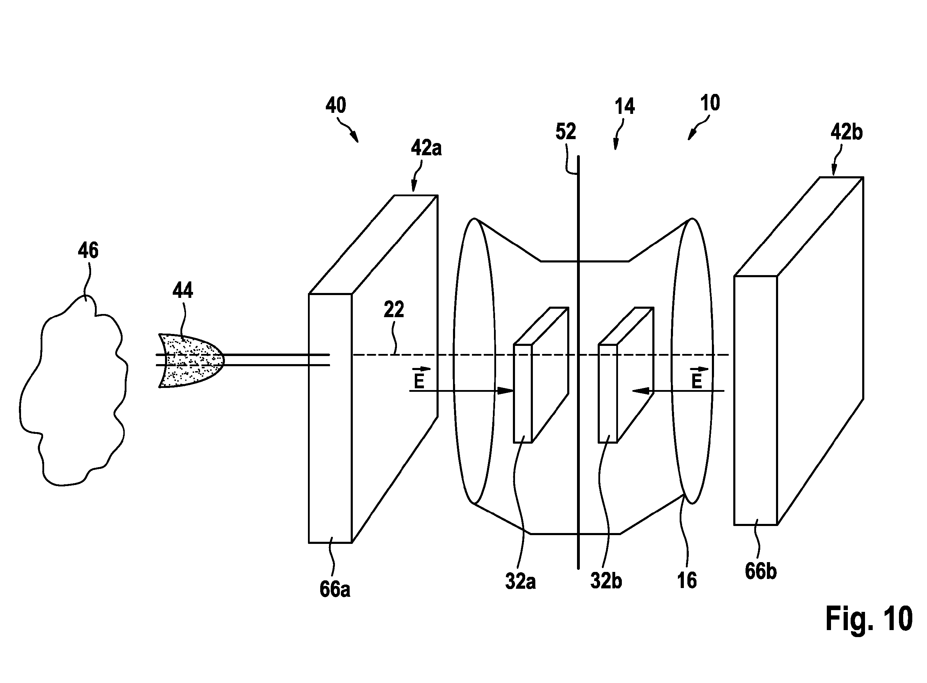

In der Fig. 10 ist eine Ausführungsform der Energieübertragungsanordnung 40 gezeigt, die auf einer kapazitiven Kopplung zwischen der Energieübertragungseinheit 42a, 42b und der Energieübertragungsvorrichtung 10 basiert. Dazu ist das Übertragungsglied 32a, 32b als Feldplatte/Kondensatorplatte 32a, 32b ausgebildet. Die Feldplatte 32a, 32b ist vorzugsweise in dem Rad 14 bzw. in der Radfelge 16 in der Nähe der Radachse 22 angeordnet. Entsprechend weist die Energieübertragungseinheit 42a, 42b eine Feldplatte 66a, 66b auf, die zusammen mit der Feldplatte 32a, 32b eine Kondensatoranordnung bildet. Vorzugsweise ist die Feldplatte 66a, 66b im Wesentlichen parallel zu der Feldplatte 32a, 32b ausgerichtet. Bei Betrieb der Energieübertragungsanordnung 40 entsteht zwischen den Feldplatten 66, 32 ein elektrisches Feld, das in der Fig. 10 mit dem Vektor E gekennzeichnet ist.

Alternativ können statt der einen in Fig. 10 gezeigten Feldplatte 32a auch mehrere Feldplatten nebeneinander verbaut werden, die dann zur Erhöhung der Kondensatoroberfläche und damit der elektrischen Kapazität parallel verschaltet werden. Außerdem können die Feldplatten 32 rund oder rechteckig ausgeformt werden.

Zur Erhöhung der übertragbaren Leistung der Energieübertragungsanordnung 40 können die Energieübertragungsvorrichtung 10 und die Energieübertragungseinheit 42 symmetrisch zu der in Fig. 10 gezeigten Symmetrieebene 52 ausgebildet werden. In dieser Anordnung werden die Feldplatten 32 vorzugsweise auf der dem Hauptfeld abgewandten Oberfläche durch geeignetes Isolationsmaterial oder eine entsprechende Beschichtung gegenüber Streufeldern der jenseits der Symmetrieebene 52 liegenden Platten geschützt.

Obgleich somit bevorzugte Ausführungsformen der erfindungsgemäßen Energieübertragungsvorrichtung 10 und der erfindungsgemäßen Energieübertragungsanordnung 40 gezeigt worden sind, versteht sich, dass verschiedene Abwandlungen und Modifikationen vorgenommen werden können, ohne den Rahmen der Erfindung zu verlassen.

Beispielsweise kann die Energieübertragungsvorrichtung 10 in beliebigen Fahrzeugen installiert werden, die wenigstens ein Rad aufweisen.

Außerdem kann mithilfe der Energieübertragungsvorrichtung 10 auch elektrische Energie von dem Fahrzeug 12 beispielsweise in ein Energieversorgungsnetz 46 eingespeist werden.

Darüber hinaus können bei der Energieübertragungsvorrichtung 10 auch mehrere unterschiedliche Ausführungsformen miteinander kombiniert werden.

## Patentansprüche

1. Energieübertragungsvorrichtung (10) für ein Fahrzeug (12), das eine Radachse (22) und wenigstens ein Rad (14) aufweist, wobei eine Radfelge (16) des Rads (14) mittels einer Verbindungseinheit (18, 20) mit der Radachse (22) mechanisch gekoppelt ist, und wobei das Rad (14) zum Abrollen auf einem Untergrund ausgebildet ist, um ein Fortbewegen des Fahrzeugs (12) zu ermöglichen, mit:
- einer Anschlusseinheit (28) zum Anschließen einer elektrischen Energiequelle oder einer elektrischen Energiesenke, und
- wenigstens einem Übertragungsglied (32), das mit der Anschlusseinheit (28) elektrisch gekoppelt ist und das dazu ausgebildet ist, mittels drahtloser Energieübertragung elektrische Energie zwischen der elektrischen Energiequelle oder Energiesenke und einer außerhalb des Fahrzeugs (12) angeordneten externen Energieübertragungseinheit (42) auszutauschen, wobei die Energieübertragungsvorrichtung (10) rotationsfest mit dem Rad (14) des Fahrzeugs (12) verbunden ist, **dadurch gekennzeichnet, dass** die Verbindungseinheit eine Mehrzahl von Speichen (18) aufweist und wobei die Energieübertragungsvorrichtung (10) eine elektrische Leitung (34) aufweist, die in einer der Speichen (18) angeordnet ist und die das Übertragungsglied (32) mit der Anschlusseinheit (28) elektrisch koppelt.

2. Energieübertragungsvorrichtung nach Anspruch 1, wobei das Übertragungsglied (32) zum Übertragen der Energie induktiv, magnetresonant oder kapazitiv mit der externen Energieübertragungseinheit (42) koppelbar ist.

3. Energieübertragungsvorrichtung nach einem der Ansprüche 1 bis 2, wobei das Übertragungsglied (32) auf oder in der Radfelge (16) angeordnet ist.

4. Energieübertragungsvorrichtung nach einem der Ansprüche 1 bis 2, wobei das Übertragungsglied (32) an der Verbindungseinheit in der Nähe der Radachse (22) angeordnet ist.

5. Energieübertragungsvorrichtung nach einem der Ansprüche 1 bis 2, wobei das Übertragungsglied (32) in einer Querschnittsebene des Rads (14) angeordnet ist und wobei die Radachse (22) in der Querschnittsebene liegt.

6. Energieübertragungsvorrichtung nach einem der Ansprüche 1 bis 5, wobei das Übertragungsglied (32) eine Spule aufweist.

7. Energieübertragungsvorrichtung nach Anspruch 6, wobei eine Längsachse der Spule parallel zu der Radachse (22) angeordnet ist.

8. Energieübertragungsvorrichtung nach Anspruch 6, wobei eine Längsachse der Spule tangential zu einem Kreis um die Radachse (22) angeordnet ist.

9. Energieübertragungsvorrichtung nach einem der Ansprüche 1 bis 8, wobei die Energieübertragungsvorrichtung (10) einen Magnetsensor (62) aufweist, der dazu ausgebildet ist, eine Ausrichtung und/oder eine Stärke eines Magnetfelds zu erfassen.

10. Energieübertragungsvorrichtung nach einem der Ansprüche 1 bis 5, wobei das Übertragungsglied (32) eine Kondensatorplatte aufweist.

11. Energieübertragungsvorrichtung nach einem der Ansprüche 1 bis 10, wobei die Energieübertragungsvorrichtung (10) einen Positionssensor (56) aufweist, der dazu ausgebildet ist, eine Position des Rads (14) zu erfassen.

12. Energieübertragungsvorrichtung nach einem der Ansprüche 1 bis 11, wobei die Energieübertragungsvorrichtung (10) eine Steuereinheit (54) aufweist, die mit der Anschlusseinheit (28) elektrisch gekoppelt ist und die dazu ausgebildet ist, die Energieübertragung zu steuern.

13. Energieübertragungsanordnung (40) für ein Fahrzeug (12), das eine Radachse (22) und wenigstens ein Rad (14) aufweist, wobei das Rad (14) mit der Radachse (22) mechanisch gekoppelt ist und zum Abrollen auf einem Untergrund ausgebildet ist, um ein Fortbewegen des Fahrzeugs (12) zu ermöglichen, mit:
- einer Energieübertragungsvorrichtung (10) nach einem der Ansprüche 1 bis 12, und
- einer außerhalb des Fahrzeugs (12) angeordneten externen Energieübertragungseinheit (42), die mit der Energieübertragungsvorrichtung (10) zum Übertragen von elektrischer Energie induktiv, magnetresonant oder kapazitiv gekoppelt ist.

14. Energieübertragungsanordnung nach Anspruch 13, wobei die Energieübertragungsvorrichtung (10) mit einer Traktionsbatterie (24) des Fahrzeugs (12) elektrisch gekoppelt ist und wobei die externe Energieübertragungseinheit (42) mit einem Energieversorgungsnetz (46) elektrisch gekoppelt ist und dazu ausgebildet ist, elektrische Energie an die Energieübertragungsvorrichtung (10) zu übertragen, um die Traktionsbatterie (24) zu laden.

## Claims

1. Energy transmission apparatus (10) for a vehicle (12) which has a wheel axle (22) and at least one wheel (14), wherein a wheel rim (16) of the wheel (14) is mechanically coupled to the wheel axle (22) by means of a connecting unit (18, 20), and wherein the wheel (14) is designed to roll on a ground surface in order to allow the vehicle (12) to move forward, comprising:
- a connection unit (28) for connecting an electrical energy source or an electrical energy sink, and
- at least one transmission element (32) which is electrically coupled to the connection unit (28) and which is designed to exchange electrical energy between the electrical energy source or energy sink and an external energy transmission unit (42) which is arranged outside the vehicle (12) by means of wireless energy transmission, wherein the energy transmission apparatus (10) is connected in a rotationally fixed manner to the wheel (14) of the vehicle (12), **characterized in that**
the connecting unit has a plurality of spokes (18), and wherein the energy transmission apparatus (10) has an electrical line (34) which is arranged in one of the spokes (18) and which electrically couples the transmission element (32) to the connection unit (28).

2. Energy transmission apparatus according to Claim 1, wherein the transmission element (32) can be coupled to the external energy transmission unit (42) inductively, by magnetic resonance or capacitively for the purpose of transmitting the energy.

3. Energy transmission apparatus according to either of Claims 1 and 2, wherein the transmission element (32) is arranged on or in the wheel rim (16).

4. Energy transmission apparatus according to either of Claims 1 and 2, wherein the transmission element (32) is arranged on the connecting unit in the vicinity of the wheel axle (22).

5. Energy transmission apparatus according to either of Claims 1 and 2, wherein the transmission element (32) is arranged in a cross-sectional plane of the wheel (14), and wherein the wheel axle (22) lies in the cross-sectional plane.

6. Energy transmission apparatus according to one of Claims 1 to 5, wherein the transmission element (32) has a coil.

7. Energy transmission apparatus according to Claim 6, wherein a longitudinal axis of the coil is arranged parallel to the wheel axle (22).

8. Energy transmission apparatus according to Claim 6, wherein a longitudinal axis of the coil is arranged tangentially in relation to a circle around the wheel axle (22).

9. Energy transmission apparatus according to one of Claims 1 to 8, wherein the energy transmission apparatus (10) has a magnetic sensor (62) which is designed to detect an orientation and/or a strength of a magnetic field.

10. Energy transmission apparatus according to one of Claims 1 to 5, wherein the transmission element (32) has a capacitor plate.

11. Energy transmission apparatus according to one of Claims 1 to 10, wherein the energy transmission apparatus (10) has a position sensor (56) which is designed to detect a position of the wheel (14).

12. Energy transmission apparatus according to one of Claims 1 to 11, wherein the energy transmission apparatus (10) has a control unit (54) which is electrically coupled to the connection unit (28) and which is designed to control the energy transmission.

13. Energy transmission arrangement (40) for a vehicle (12) which has a wheel axle (22) and at least one wheel (14), wherein the wheel (14) is mechanically coupled to the wheel axle (22) and is designed to roll on a ground surface in order to allow the vehicle (12) to move forward, comprising:
- an energy transmission apparatus (10) according to one of Claims 1 to 12, and
- an external energy transmission unit (42) which is arranged outside the vehicle (12) and which is coupled to the energy transmission apparatus (10) inductively, by magnetic resonance or capacitively in order to transmit electrical energy.

14. Energy transmission arrangement according to Claim 13, wherein the energy transmission apparatus (10) is electrically coupled to a traction battery (24) of the vehicle (12), and wherein the external energy transmission unit (42) is electrically coupled to an energy supply system (46) and is designed to transmit electrical energy to the energy transmission apparatus (10) in order to charge the traction battery (24).

## Revendications

1. Ensemble (10) de transfert d'énergie pour un véhicule (12) qui présente un essieu (22) de roue et au moins une roue (14),
une jante (16) de la roue (14) étant accouplée mécaniquement à l'essieu (22) de roue au moyen d'une unité de liaison (18, 20),
la roue (14) étant configurée pour rouler sur un soubassement pour permettre le déplacement du véhicule (12), l'ensemble présentant :
une unité de raccordement (28) permettant de raccorder une source d'énergie électrique ou un drain d'énergie électrique et
au moins un organe de transfert (32) qui est raccordé électriquement à l'unité de raccordement (28) et qui est configuré pour, par transfert d'énergie sans fil, échanger de l'énergie électrique entre la source d'énergie électrique ou le drain d'énergie électrique et une unité externe (42) de transfert d'énergie disposée à l'extérieur du véhicule (12),
l'ensemble (10) de transfert d'énergie étant relié à rotation solidaire à la roue (14) du véhicule (12), **caractérisé en ce que**
l'unité de liaison présente plusieurs rayons (18),
**en ce que** l'ensemble (10) de transfert d'énergie présente un conducteur électrique (34) disposé dans l'un des rayons (18) et qui raccorde électriquement l'organe de transfert (32) à l'unité de raccordement (28).

2. Ensemble de transfert d'énergie selon la revendication 1, dans lequel pour le transfert d'énergie, l'organe de transfert (32) peut être raccordé par induction, par résonance magnétique ou par voie capacitive à l'unité externe (42) de transfert d'énergie.

3. Ensemble de transfert d'énergie selon l'une des revendications 1 et 2, dans lequel l'organe de transfert (32) est disposé sur ou dans la jante (16) de la roue.

4. Ensemble de transfert d'énergie selon l'une des revendications 1 et 2, dans lequel l'organe de transfert (32) est disposé sur l'unité de liaison à proximité de l'essieu (22) de la roue.

5. Ensemble de transfert d'énergie selon l'une des revendications 1 et 2, dans lequel l'organe de transfert (32) est disposé dans un plan transversal de la roue (14), l'essieu (22) de la roue étant situé dans le plan transversal.

6. Ensemble de transfert d'énergie selon l'une des revendications 1 à 5, dans lequel l'organe de transfert (32) présente une bobine.

7. Ensemble de transfert d'énergie selon la revendication 6, dans lequel l'axe longitudinal de la bobine est disposé parallèlement à l'axe (22) de la roue.

8. Ensemble de transfert d'énergie selon la revendication 6, dans lequel l'axe longitudinal de la bobine est disposé tangentiellement à un cercle qui entoure l'essieu (22) de la roue.

9. Ensemble de transfert d'énergie selon l'une des revendications 1 à 8, dans lequel l'ensemble (10) de transfert d'énergie présente un capteur magnétique (62) configuré pour saisir l'orientation et/ou l'intensité d'un champ magnétique.

10. Ensemble de transfert d'énergie selon l'une des revendications 1 à 5, dans lequel l'organe de transfert (32) présente une plaque de condensateur.

11. Ensemble de transfert d'énergie selon l'une des revendications 1 à 10, dans lequel l'ensemble (10) de transfert d'énergie présente un capteur de position (56) configuré pour saisir la position de la roue (14).

12. Ensemble de transfert d'énergie selon l'une des revendications 1 à 11, dans lequel l'ensemble (10) de transfert d'énergie présente une unité de commande (54) raccordée électriquement à l'unité de raccordement (28) et configurée pour commander le transfert d'énergie.

13. Ensemble (40) de transfert d'énergie pour un véhicule (12) qui présente un essieu (22) de roue et au moins une roue (14), la roue (14) étant accouplée mécaniquement à l'essieu (22) et étant configurée pour rouler sur un soubassement pour permettre le déplacement du véhicule (12), l'ensemble présentant :
un ensemble (10) de transfert d'énergie selon l'une des revendications 1 à 12 et
une unité externe (42) de transfert d'énergie disposée à l'extérieur du véhicule (12) et couplée par induction, par résonance magnétique ou de manière capacitive à l'ensemble (10) de transfert d'énergie pour transférer de l'énergie électrique.

14. Ensemble de transfert d'énergie selon la revendication 13, dans lequel l'ensemble (10) de transfert d'énergie est raccordé électriquement à une batterie de traction (24) du véhicule (12), l'unité externe (42) de transfert d'énergie étant raccordée électriquement à un réseau (46) d'alimentation en énergie et configurée pour transférer de l'énergie électrique à l'ensemble (10) de transfert d'énergie pour charger la batterie de traction (24).
